Europäisches Patentamt

European Patent Office

Office européen des brevets

(11) Veröffentlichungsnummer: **0 064 755**
**A2**

(12) # EUROPÄISCHE PATENTANMELDUNG

(21) Anmeldenummer: **82104020.1**

(51) Int. Cl.³: **F 24 H 1/40**

(22) Anmeldetag: **08.05.82**

(30) Priorität: **09.05.81 DE 3118549**

(43) Veröffentlichungstag der Anmeldung:
**17.11.82 Patentblatt 82/46**

(84) Benannte Vertragsstaaten:
**AT BE CH DE FR GB IT LI LU NL SE**

(71) Anmelder: **Seeger, Heinz-Dieter**
**Bremmenstrasse 18**
**D-4600 Dortmund 13(DE)**

(72) Erfinder: **Seeger, Heinz-Dieter**
**Bremmenstrasse 18**
**D-4600 Dortmund 13(DE)**

(74) Vertreter: **Schulze Horn, Hannes, Dr.-Ing.**
**Im Defdahl 51**
**D-4600 Dortmund 1(DE)**

(54) **Heizung mit geringster Abgastemperatur.**

(57) Die Erfindung betrifft einen Heizkessel für Zentralheizungsanlagen, der dadurch gekennzeichnet ist, daß er eine Vielzahl von annähernd waagerecht liegenden, untereinander verbundenen Heizrohren in einem Brennraum und in einem Hüllraum aufweist, die vorzugsweise durch mehrere kleine Flammen erwärmt werden. Dabei ist ca. 30 % der Wärmetauscherfläche im Brennraum und ca. 70 % im Hüllraum angeordnet. Im Brennraum steigen die Brenngase auf, im Hüllraum werden sie abwärts geführt und verlassen den Kessel nach Kondensatabscheidung.

EP 0 064 755 A2

Funktionsbeschreibung
zur Allgas-Heizung mit geringster Abgastemperatur

Sinn und Zweck der nachfolgend beschriebenen Anlage ist es,
die Heizkosten durch eine fast völlige Ausnutzung der Heizenergie "Gas" zu senken.
Bei dieser Anlage handelt es sich um einen von mir neu entwickelten Heizkessel für Zentralheizungen.
Er arbeitet nach dem Prinzip der Außenwandgasöfen und kann
je nach Auslegung somit von der Einraumbeheizung, mit einem
Heizkörper (als Ersatz für einen Gasaußenwandofen) bis zur
Beheizung von großen Gewerbeobjekten mit geringsten Abgasverlusten Verwendung finden.
Das Besondere dieser Anlage ist die enorme Wärmeübernahmefläche (Rohroberfläche) verteilt über den gesamten Temperaturbereich der Heizenergie.

Beispiel:  Länge eines Rohres              ca. 2,40 m
           Rohrdurchmesser                 28 mm
           Anzahl lt. Zeichnung (Blatt 2)  26 Rohre
           Gesamtlänge der Rohre           62,40 m
           Gesamtinhalt der Rohre          ca. 31 Liter
           Gesamtoberfläche der Rohre      ca. 5,50 qm

Bei üblichen Heizkesseln beträgt die Wärmeübernahmefläche
bis ca. 1,00 qm - bei o.a. Beispiel bereits 5,50 qm.

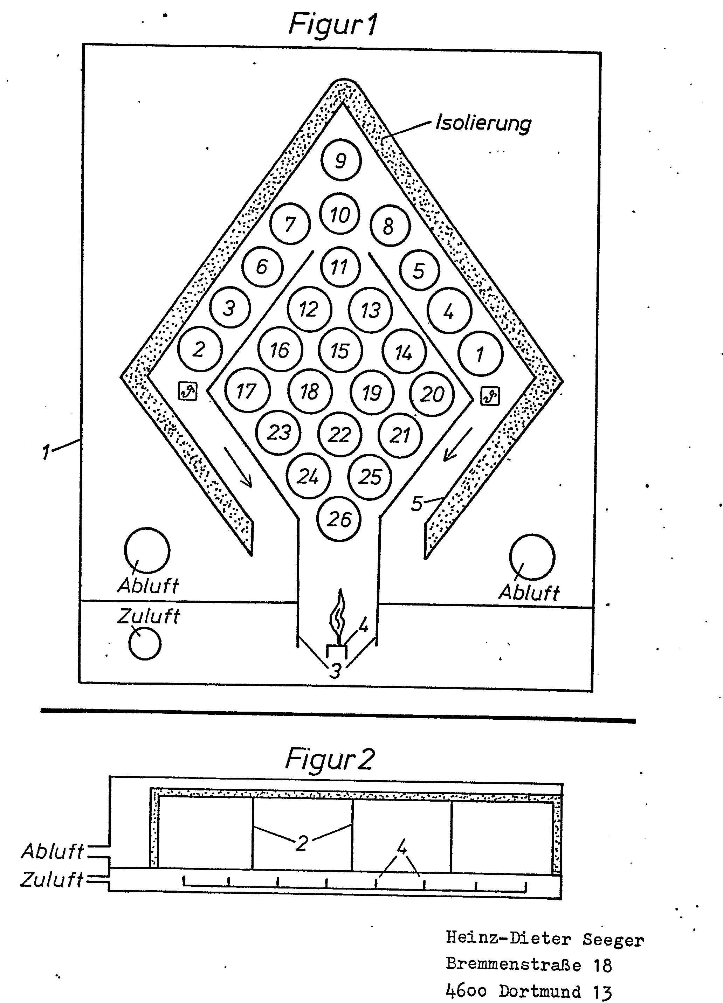

In einem geschlossenen Gehäuse (1) befinden sich mehrere
Trennwände (2) in Form der Fig.1 (Blatt 2) die auch gleichzeitig die Träger der waagerecht durchlaufenden Rohre
(1 bis 26) sind. Die Wärmeleitbleche (3) sind an dem Abdeckblech (5) verschweißt. Das Abdeckblech ist gegen Wärmeverluste nach Außen isoliert.

So erhalte ich gemäß Seitenansicht Fig.2 vier Kammern,
durch die waagerecht über die Gesamtlänge die Rohre
1 bis 26 laufen.

Die Rohre müssen in der Reihenfolge der Zahlen von 1 bis 26
hintereinander verbunden werden.

Dies bedeutet für eine angeschlossene Zentralheizanlage,
das mit 1 bezeichnete Rohr ist der "Rücklauf", das mit 26
bezeichnete Rohr ist der "Vorlauf".

In Fig. 2 habe ich pro Kammer zwei Gasdüsen (4) eingezeichnet, insgesamt also acht, die gleichzeitig in Betrieb
sind und die Rohre von unten aufwärmen.

Die Menge des zu verbrennenden Gases (Gesamtheizleistung)
wird stufenlos über eine Temperaturüberwachung ($\mathcal{J}$ (Fernfühler) der Abgastemperatur unter den mit 1 und 2 gekennzeichneten Rohren automatisch geregelt.

Die Abgastemperatur braucht nur minimal höher zu sein als
die Rücklauftemperatur des durchfließenden Heizmediums.

Die gewünschte Vorlauftemperatur kann von Hand oder einem
Außenfühler eingestellt werden.

Die Abgastemperatur ist somit nicht höher als die Rücklauftemperatur des durchfließenden Heizmediums.

Im Gegensatz zu einer normalen Heizanlage, die sich ein- und
ausschaltet und beim Einschalten ihre volle Leistung abgibt,
kann ich bei dieser Anlage mit einer dauernden, gleichbleibenden, wesentlich niedrigeren Gesamtheizleistung fahren.

Anlage zum Patentgesuch von                    See/82/1
Heinz Dieter Seeger
Dortmund

## Heizung mit geringster Abgastemperatur

### Patentansprüche

1. Heizkessel für Zentralheizungsanlagen, d a d u r c h g e k e n n z e i c h n e t, daß er eine Vielzahl von annähernd waagerecht liegenden, untereinander verbundenen Heizrohren in einem Brennraum und in einem Hüllraum aufweist, die vorzugsweise durch mehrere kleine Flammen erwärmt werden.

2. Heizkessel nach Anspruch 1, d a d u r c h g e - k e n n z e i c h n e t, daß die Verbrennung des Gases mit Zugabe von reinem Sauerstoff erfolgt.

3. Heizkessel nach Anspruch 1 oder 2, d a d u r c h g e - k e n n z e i c h n e t, daß ca. 30 % der Wärmetauscherfläche im Brennraum und ca. 70 % im Hüllraum angeordnet sind.

4. Heizkessel nach Anspruch 1, 2 oder 3, d a d u r c h g e k e n n z e i c h n e t, daß er einen Innenraum aufweist, in dem die Brenngase aufsteigen sowie einen Hüllraum durch den die Brenngase abwärts geführt den Kessel verlassen.

5. Heizkessel nach Anspruch 1, 2, 3 oder 4, d a - d u r c h g e k e n n z e i c h n e t, daß er Naturzug aufweisend ausgebildet ist.

6. Heizkessel nach einem der vorhergehenden Ansprüche, d a d u r c h g e k e n n z e i c h n e t, daß während der Abwärtsbewegung der Brenngase eine Kondensatabscheidung erfolgt.

## Figur 1

Isolierung

Abluft  Abluft

Zuluft

## Figur 2

Abluft

Zuluft

Heinz-Dieter Seeger
Bremmenstraße 18
4600 Dortmund 13

--3--